**Europäisches Patentamt**

**European Patent Office**

**Office européen des brevets**

(11) Veröffentlichungsnummer: **0 458 063 A2**

## (12) EUROPÄISCHE PATENTANMELDUNG

(21) Anmeldenummer: 91106206.5

(22) Anmeldetag: 18.04.91

(51) Int. Cl.5: **B29B 13/02**, B29C 31/00,
B29C 67/14, B29C 51/42,
//B29K105:08

(30) Priorität: 23.05.90 DE 4016565

(43) Veröffentlichungstag der Anmeldung:
27.11.91 Patentblatt 91/48

(84) Benannte Vertragsstaaten:
DE ES FR GB IT SE

(71) Anmelder: FIBRON Gesellschaft mit
beschränkter Haftung
Carl-Benz-Strasse 1
W-7518 Bretten(DE)

(72) Erfinder: Brüssel, Richard, Dipl.-Ing.
Hauptstrasse 106
W-7519 Sulzfeld(DE)

(74) Vertreter: Durm, Klaus, Dr.-Ing. et al
Patentanwälte Dr.-Ing. Klaus Durm Dipl.-Ing.
Frank Durm Felix-Mottl-Strasse 1a
W-7500 Karlsruhe 21(DE)

(54) **Aufheizeinrichtung.**

(57) Vor dem Verpressen von glasfasermattenverstärkten Thermoplasten ist es erforderlich, die plattenförmigen GMT-Zuschnitte durch Aufheizen außerhalb der Presse plastisch und formbar zu machen. Dabei soll zur Erzielung hoher Bauteilqualitäten und niederer Herstellkosten eine möglichst hohe Vorwärmtemperatur bei schneller Aufheizzeit erzielt werden.

Es wird eine Aufheizeinrichtung, bestehend aus einem Stapel 3 von übereinander angeordneten Heizplatten mit dazwischen liegendem, verschiebbaren Rahmen 2 vorgeschlagen, welche mit Bespannungen 18 für die Zuschnitte 19 versehen sind. Die Heizplatten 1 greifen in die Rahmen 2 hinein, so daß eine sehr dichte Packung erzielt wird. Zum Beschikken und Entladen der Rahmen 2 sind ein Hubgerät 4 für den Stapel 3, eine Halteeinrichtung 5 für die Heizplatten 1 und eine Verschiebeeinrichtung 6 für die Rahmen 2 vorgesehen, die zusammenwirken.

Fig.1

Die Erfindung betrifft eine Aufheizeinrichtung für plattenförmige Zuschnitte thermoplastischer Kunststoffe mit Heizeinrichtungen zum Aufheizen der Zuschnitte und mit beweglichen, zwischen den Heizeinrichtungen vorgesehenen Transportmitteln für die Zuschnitte.

Die vorgeschlagene Aufheizeinrichtung findet insbesondere Anwendung bei der Herstellung von Formteilen aus mit Glasfasermatten verstärkten Thermoplasten (GMT-Formmassen) mit Hilfe von Preßwerkzeugen.

Es ist erforderlich, vor dem Verpressen die glasfaserverstärkten Formmassen außerhalb der Preßwerkzeuge aufzuheizen, um sie plastisch und formbar zu machen. Das beherrschte Aufheizen spielt eine entscheidende Rolle für die Qualität der gefertigten Bauteile. Dabei soll das Aufheizen schnell vor sich gehen und es soll eine möglichst hohe, nahe an die Materialzerstörung herankommende Temperatur erreicht werden, um eine gute Fließfähigkeit zum Zwecke der vollständigen Ausformung der Teile zu erzielen. Aufzuheizen sind insbesondere plattenförmige GMT-Zuschnitte bis zu wenigen Millimetern Dicke und verschiedener Abmessungen, die nach Erreichen der gewünschten Temperatur sofort in das Preßwerkzeug eingelegt werden.

In der zurückliegenden Zeit hat es nicht an Bemühungen gefehlt, das Aufheizen der GMT-Zuschnitte so vorteilhaft wie möglich zu gestalten. So ist es bekannt, die Zuschnitte durch Wärmeleitung, durch Kontakterwärmung, durch erzwungene Konvektion oder durch Infrarot-Strahlung auf die Verpreßtemperaturen zu bringen und es sind verschiedene Aufheizeinrichtungen vorgeschlagen worden, welche von einer oder mehrerer dieser Aufwärmmethoden Gebrauch machen (Dipl.-Ing. M.Mahlke, Prof.Dr.-Ing. Walter Michaeli: "Strategien und Anlagenkonzepte für das Vorheizen von GMT", Vortrag 22.AVK-Tagung Mainz, Mai 1989, Tagungsunterlagen). Keine der bekannten Vorrichtungen bringt jedoch wirklich befriedigende Ergebnisse, sei es, daß der Energieeinsatz zu hoch, der Platzbedarf zu groß und die Vorrichtung störanfällig ist oder daß bei der Aufheizung thermische Schäden am Material auftreten und die Aufheizzeiten zu lang sind.

Die Aufgabe der Erfindung besteht in der Konzeption einer Aufheizeinrichtung für Zuschnitte aus mit Glasmatten verstärkten Thermoplasten, welche mit geringstmöglichen Energieaufwand, minimalem Platzbedarf und hoher Betriebssicherheit eine schnelle, gleichmäßige und materialschonende Aufheizung durchzuführen erlaubt.

Zur Lösung der gestellten Aufgabe wird ausgegangen von einer Aufheizeinrichtung für plattenförmige Zuschnitte thermoplastischer Kunststoffe mit Heizeinrichtungen zum Aufheizen der Zuschnitte und mit beweglichen, zwischen den Heizeinrichtungen vorgesehenen Transportmitteln für die Zuschnitte. Gelöst wird die Aufgabe dadurch, daß als Heizeinrichtungen ebene Heizplatten dienen, die mit Innenbeheizungen versehen und mit flexiblen Zu- und Ableitungen für den Wärmeträger ausgestattet sind, daß als Transportmittel ebene Rahmen mit einer Bespannung als Auflage für die Zuschnitte dienen, daß ferner ein Hubgerät mit horizontaler Tischplatte vorgesehen ist, daß die Heizplatten als Stapel übereinander angeordnet sind, wobei die Rahmen jeweils dazwischen vorgesehenen und horizontal verschiebbar sind, wobei der Stapel auf der Tischplatte aufliegt und mittels des Hubgeräts vertikal heb- und senkbar ist, und dadurch, daß eine Haltevorrichtung mit gegeneinander bewegbaren Auflagern vorgesehen ist, weiche jeweils eine der Heizplatten seitlich untergreifen.

Der Platzbedarf der vorgeschlagenen Aufheizeinrichtung ist gering, weil ihre Heizeinrichtungen und Transportmittel im Stapel dicht übereinander angeordnet sind; eine Maßnahme, welche einen sehr geringen Abstand zwischen den Heizplatten und den aufzuheizenden Zuschnitten ermöglicht und eine schonende Aufheizung durch gleichzeitige Anwendung von Wärmestrahlung, Wärmeleitung und Konvektion gewährleistet. Dabei sind Überhitzungen ausgeschlossen, weil die Temperatur der Heizplatten unterhalb der Schädigungstemperatur der Formmassen liegt. Die kompakte Bauweise der Einrichtung reduziert Wärmeverluste und ermöglicht ein schnelles Aufheizen der Materialzuschnitte.

In vorteilhafter Ausgestaltung der Erfindung besitzt die Aufheizeinrichtung eine Verschiebeeinrichtung für die Rahmen, was deren Beschickung mit den aufzuwärmenden Zuschnitten und deren Entnahme wesentlich erleichtert.

Zweckmäßig besteht die Verschiebeeinrichtung aus einem Schiebewagen mit beweglichen Tragorganen und Koppelmitteln sowie einer diesem gegenüberliegenden Gleitschiene. Dieser Schiebewagen dient zum Herausfahren des jeweils zu beschickenden Rahmens aus dem mittels des Hubgerätes und der Haltevorrichtung vorher geöffneten Stapels, wobei dieser Rahmen auf der dem Schiebewagen gegenüber angeordneten Gleitschiene läuft.

Die Aufheizeinrichtung kann einen den Stapel übergreifenden, doppelten, U-förmigen Portalrahmen aufweisen, an welchem sowohl die Haltevorrichtung wie die Verschiebeeinrichtung angeordnet sind. Ein solcher Portalrahmen ist ein mit geringem Aufwand herstellbares, stabiles Bauelement.

Zweckmäßig ist der Schiebewagen auf einer horizontalen Laufschiene verschiebbar, die am Portalrahmen befestigt ist. Die Verschiebung selbst kann etwa mit Hilfe eines umsteuerbaren Getriebemotores geschehen.

Vorteilhaft sind die Rahmen seitlich mit Koppelbolzen versehen, mit welchen die Koppelmittel des Schiebewagens zusammenarbeiten, während die Tragorgane den betreffenden Rahmen untergreifen. Diese Koppelbolzen verbinden im Zusammenwirken mit den Koppelmitteln den heraus- bzw. hereinzuschiebenden Rahmen mit dem Schiebewagen.

Nach einem weiteren Merkmal der Erfindung weist die Gleitschiene im Bereich des Stapels ein seitlich verschiebbares Mittelteil auf. Dieses Mittelteil wird während des Hebens bzw. Senkens des Stapels seitlich verschoben, um die Vertikalbewegung des Stapels nicht zu behindern.

Als Innenbeheizung der aus Stahl bestehenden Heizplatten kann ein Kanalsystem für einen flüssigen Wärmeträger - beispielsweise ein Thermoöl oder auch Sattdampf - vorgesehen sein.

An zwei gegenüberliegenden Seiten der einen rechteckigen Grundriß aufweisenden Heizplatten können jeweils zwei parallele Tatzen hervorstehen, die zum Untergreifen durch die Auflager der Haltevorrichtung dienen.

In vorteilhafter Ausgestaltung der Erfindung weisen die Heizplatten an ihren Unterseiten Distanzelemente auf. Diese Distanzelemente gewährleisten den für die zwischen den Heizplatten vorgesehenen Rahmen notwendigen Abstand.

Zweckmäßig werden die Distanzelemente innerhalb des Stapels durch die einen rechteckigen Grundriß aufweisenden Rahmen hindurchgreifen.

Nach einem weiteren vorteilhaften Merkmal der Erfindung weisen die Rahmen eine lichte Öffnung auf, welche größer ist als der Grundriß der Heizplatten, und ragen die Heizplatten in die Rahmen hinein. Dies ermöglicht geringstmögliche Abstände zwischen den Heizplatten und den aufzuwärmenden Zuschnitten.

Zweckmäßig dienen als Bespannung der Rahmen parallele Spanndrähte als Auflage für die Zuschnitte, die durch Zugfedern unter Spannung gehalten werden. Diese Spanndrähte bilden einen einfachen, den Wärmeübergang auf die Zuschnitte nicht behindernden Rost.

Jeder Rahmen kann einen seitlich herausstehenden Tragflansch aufweisen, welcher beim Heraus- und Hineinfahren zur Auflage auf der Gleitschiene dient.

Vorteilhaft ist die Tischplatte des Hubgerätes durch wenigstens ein hydraulisches Zylinder-Kolben-Aggregat vertikal heb- und senkbar.

Als Haltevorrichtung können in weiterer, vorteilhafter Ausgestaltung der Erfindung vier vertikal angeordnete Tragbalken dienen, welche paarweise an horizontalen Querholmen des Portalrahmens hängend und gegeneinander verschiebbar vorgesehen sind und an deren freien Enden jeweils das Auflager zum Unter-greifen der Tatzen der zu haltenden Heizplatten sitzt.

Vorteilhaft sind an jedem Tragbalken mehrere Auflager kammartig übereinander angeordnet, deren Abstände mit denjenigen der Tatzen der übereinanderliegenden Heizplatten im wesentlichen übereinstimmen.

Der Anteil der von den Heizplatten auf die Zuschnitte übertragenen Strahlungswärme kann erheblich vergrößert werden, wenn die den Rahmen zugewandten Oberflächen der Heizplatten einen geeigneten Überzug aufweisen, welcher beispielsweise aus einer temperaturbeständigen Rußfarbe bestehen kann.

Die Erfindung wird nachfolgend an einem Ausführungsbeispiel anhand der beigefügten Zeichnungen näher erläutert. Dabei zeigen:

Fig. 1    einen Vertikalschnitt durch eine Aufheizeinrichtung, geschnitten entlang der Linie I - I in Figur 2;

Fig. 2    einen Horizontalschnitt durch die Aufheizeinrichtung nach Figur 1, geschnitten längs der Linie II - II in Figur 1.

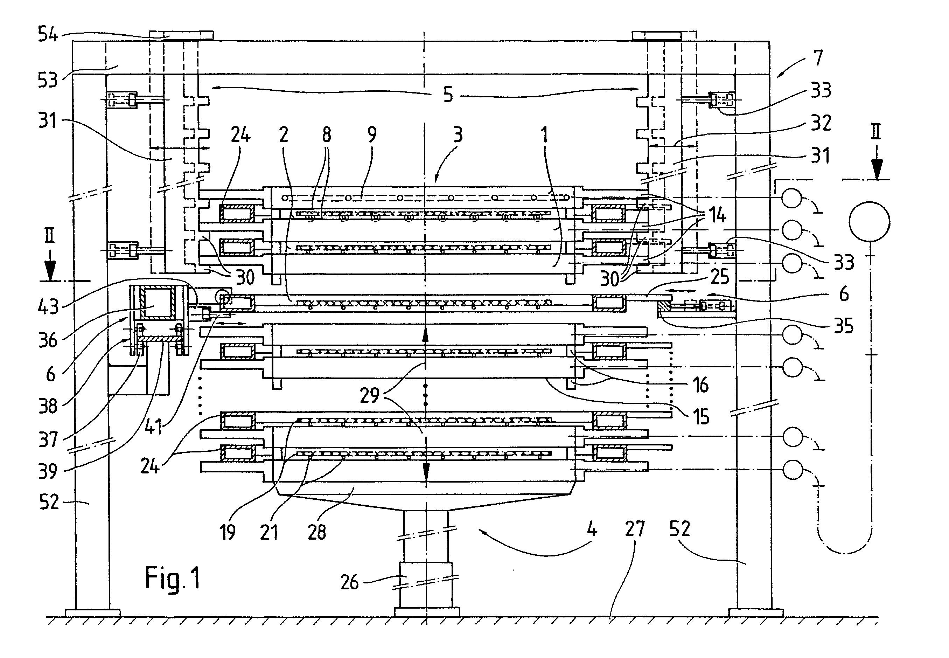

Die in den beiden Zeichnungen dargestellte Aufheizeinrichtung besteht im wesentlichen aus einer Mehrzahl von Heizplatten 1 und Rahmen 2, die in einem Stapel 3 übereinander angeordnet sind, einem Hubgerät 4, einer mehrteiligen Haltevorrichtung 5, einer zweiteiligen Verschiebeeinrichtung 6 sowie einem Portalrahmen 7 - vergleiche insbesondere Figur 1.

Die einen rechteckigen Grundriß aufweisenden und als Heizeinrichtungen dienenden Heizplatten 1 sind alle gleich ausgebildet, bestehen beispielsweise aus Stahl und besitzen auf ihren den Rahmen 2 zugewandten Oberflächen einen Überzug 8, wie dies bei der obersten Heizplatte 1 des Stapels 3 in Figur 1 angedeutet ist. Dieser Überzug ist entweder die dunkle Walzhaut des Stahles, dessen gerostete Oberfläche oder eine temperaturbeständige Rußfarbe.

Alle Heizplatten 1 weisen eine Innenbeheizung 9 in Gestalt eines Kanalsystems auf, welches von einem flüssigen Wärmeträger - beispielsweise von Thermoöl - durchströmt ist, welcher die Heizplatten 1 auf eine konstante Temperatur von etwa 200 Grad Celsius (bei dem Matrixwerkstoff Polypropylen) aufheizt. Für hochwertigere thermoplastische Marixwerkstoffe kann die Temperatur bis 350 Grad Celsius betragen. Jedes Kanalsystem ist außerhalb der Heizplatten 1 mit einem starren Rohrsystem 10 verbunden, von welchem flexible Zu- und Ableitungen 11 zu einer Kesselanordnung 12 für den Wärmeträger führen.

Jede Heizplatte 1 trägt an zwei einander gegenüberliegenden Seiten jeweils zwei parallel hervorstehende, flache Tatzen 13 und 14, welche an den Seitenkanten der Heizplatten 1 angebracht sind. Die Heizplatten 1 weisen an ihren Unterseiten 15 Distanzelemente 16 auf, die wie niedere Füße oder Leisten an den vier Ecken der Heizplatten 1 vorgesehen sind.

Die Rahmen 2 liegen im Stapel 3 zwischen den durch die Distanzelemente 16 im Abstand gehaltenen Heizplatten 1 und sie sind horizontal verschiebbar, d.h. sie können unter bestimmten Voraussetzungen aus dem Stapel 3 in Richtung der beiden Pfeile 17 nach vorn und nach hinten zum Beschicken bzw. Entladen aus dem Stapel 3 herausgeschoben werden.

Alle Rahmen 2 sind gleich ausgebildet und sie bestehen aus einem Stahlrohr von rechteckigem Querschnitt, wie Figur 1 zu entnehmen ist. Jeder Rahmen 2 weist eine Bespannung 18 als Auflage für die zu erwärmenden, plattenförmigen Zuschnitte 19 (Figur 1) aus glasfasermattenverstärktem Thermoplast (GMT) auf.

Die Rahmen 2 weisen einen rechteckigen Grundriß auf und sie besitzen eine lichte Öffnung (in welcher sich die Bespannung befindet), welche größer ist als der Grundriß der Heizplatten 1 - wie in Figur 1 erkennbar. Die Heizplatten 1 ragen jeweils von oben und von unten etwas in diese lichten Öffnungen hinein; der Abstand der Heizplatten 1 im Stapel 3 ist etwa halb so groß wie die Dicke der Rahmen 2 und ist durch die Distanzelemente 16 festgelegt. Als Bespannung 18 dienen mehrere parallele Spanndrähte 21 aus Stahl, die durch in Gehäusen 22 sitzende Federn 23 ständig unter Spannung gehalten werden.

Jeder Rahmen 2 ist seitlich, und zwar an zwei einander benachbarten Ecken, mit zwei Koppelbolzen 24 versehen, die koaxial angeordnet sind, in der Ebene des Rahmens 2 liegen und nach außen gerichtet sind. Außerdem weist jeder Rahmen 2 einen seitlich herausstehenden Tragflansch 25 auf, der ebenfalls in der Ebene des Rahmens 2 liegt und weniger als die Hälfte der Höhe des Stahlrohrs dick ist. Die Koppelbolzen 24 und der Tragflansch 25 liegen an zwei einander gegenüberliegenden Seiten des Rahmens 2.

Der Stapel 3, welcher aus abwechselnd übereinander liegenden Heizplatten 1 und Rahmen 2 besteht, besitzt eine quaderförmige Gestalt. Die Tatzen 13 und 14 der Heizplatten 1 und die Tragflansche 25 liegen dabei übereinander und die Anordnung ist so getroffen, daß die Tragflansche 25 zwischen zwei Tatzen 14 liegen. Die Tatzen 13 und 14 überragen seitlich die Rahmen 2, desweiteren ragen die Tragflansche 25 über die beiden Tatzen 14 hinaus: sie sind länger als die Tatzen 14.

Das Hubgerät 4 besteht aus einem hydraulischen Zylinder-Kolben-Aggregat 26, das auf dem Boden 27 steht. Der Kolben dieses Aggregates 26 trägt eine horizontale Tischplatte 28, auf welcher der Stapel 3 liegt. Der Stapel 3 ist mittels des Hubgerätes 4 in vertikaler Richtung heb- und senkbar, wie die Pfeile 29 andeuten.

Die aus mehreren Teilen bestehende Haltevorrichtung 5 gestattet es im Zusammenwirken mit dem Hubgerät 4, jeden der Rahmen 2 innerhalb des Stapels 3 gerade so weit von seiner oberen und seiner unteren Heizplatte 1 in vertikaler Richtung zu entfernen, daß er in horizontaler Richtung nach vorn bzw. nach hinten (in Richtung der Pfeile 17) aus dem Stapel 3 herausgeschoben werden kann. Zu diesem Zwecke besitzt die Haltevorrichtung 5 gegeneinander bewegbare Auflager 30, welche die oberen Heizplatten 1 untergreifen.

Als Haltevorrichtung 5 dienen vier vertikal angeordnete Tragbalken 31 (siehe Figur 1), die paarweise in horizontaler Richtung gegeneinander verschiebbar sind, was in der Zeichnung durch Strichlinien und durch die Pfeile 32 angedeutet ist. Zur Verschiebung der Tragbalken 31 sind Paare von Hydraulikzylinder 33 vorgesehen, die am Portalrahmen 7 befestigt sind. An dem freien, unteren Ende jedes Tragbalkens 31 sitzt ein Auflager 30, über welchem kammartig eine der Zahl der Rahmen 2 entsprechende Anzahl von weiteren Auflagern 30 hervorsteht, deren Abstände mit denjenigen der Tatzen 13 und 14 der übereinanderliegenden Heizplatten 1 übereinstimmt. Sind die Tragbalken 31 gegeneinander geschoben, dann untergreifen die Auflager 30 die Tatzen 13 bzw. 14 der Heizplatten 1, die sich oberhalb des herauszuschiebenden Rahmens 2 in ihrem Greifbereich befinden. Die Abstände sind nicht äquidistant und so gewählt, daß sich die Tatzen 13 und 14 beim Betätigen der Vorrichtung nacheinander auflegen und daß zuletzt jede Heizplatte 1 getrennt von der andern auf vier Auflagern 30 aufliegt.

Die Verschiebeeinrichtung 6 dient zur horizontalen Verschiebung der Rahmen 2 und sie erlaubt es, jeden einzelnen Rahmen 2 zum Auflegen der vorzuwärmenden Zuschnitte 19 auf die Bespannung 18 nach vorn, und zum Entnehmen der warmen Zuschnitte 19 nach hinten (oder umgekehrt) zwischen den Heizplatten 1 aus dem Stapel 3 heraus bzw. hineinzuschieben.

Die Verschiebeeinrichtung 6 für den Rahmen 2 besteht aus einem Schiebewagen 34 auf der einen Seite des Stapels 3 und einer Gleitschiene 35 auf der gegenüberliegenden Seite des Stapels 3. Beide sind am Portalrahmen 7 seitlich und innen angeordnet.

Den Schiebewagen 34 bildet im wesentlichen ein Rohr 36 von quadratischem Querschnitt, welches mittels zweier, mit Laufrollen 37 ausgestatteten Laufkatzen 38 auf einer horizontalen Laufschiene 39 längsverschiebbar (Pfeil 40) ist. Diese aus einem langen Flachstab bestehende Laufschiene 39 ist innen am Portalrahmen 7 befestigt.

Der Schiebewagen 34 trägt im Bereich seiner beiden Enden Tragorgane 41 und Koppelmittel 42.

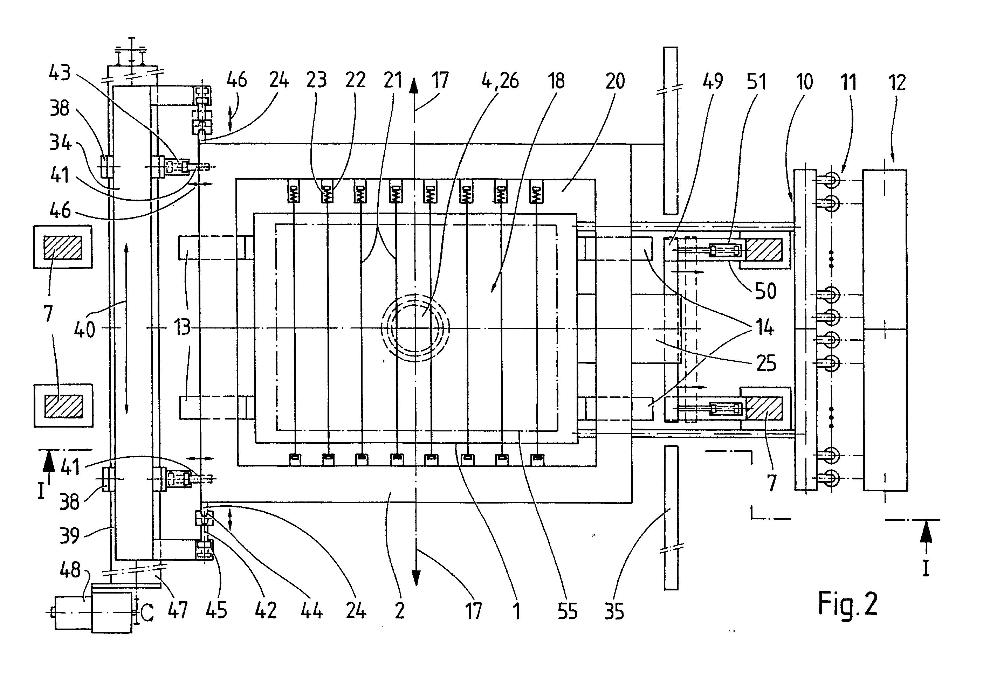

Die beiden Tragorgane 41 sind bewegliche, mittels Hydraulikzylindern 34 längsverschiebbare, zylindrische Nasen, die in ihrer ausgefahrenen Stellung (die in den Figuren 1 und 2 dargestellt ist) den auszuschiebenden Rahmen 2 untergreifen. Die beiden Koppelmittel 42 weisen konische Aufnahmen 44 auf, in welche die beiden Koppelbolzen 24 des betreffenden Rahmens 2 eingreifen. Diese Koppelmittel 42 sitzen an den freien Enden der Kolben von weiteren Hydraulikaggregaten 45. Die Bewegungen der Tragorgane 41 und der Koppelmittel 42 sind durch Doppelpfeile 46 versinnbildlicht.

Der Schiebewagen 34 wird durch einen Seil- oder Kettenzug 47 mittels eines umsteuerbaren Getriebemotors 48 zum Beschicken bzw. Entnehmen auf der Laufschiene 39 verschoben.

Die zur Verschiebeeinrichtung 6 gehörende Gleitschiene 35 erstreckt sich auf der der Laufschiene 39 gegenüberliegenden Seite des Stapels 3 und sie liegt etwa auf der gleichen Höhe wie die Laufschiene 39, besitzt annähernd die gleiche Länge und sie liegt parallel zur Laufschiene 39. Beim Aus- bzw. Einschieben des zu beladenden bzw. zu entladenden Rahmens 2 gleitet der Tragflansch 25 dieses Rahmens 2 auf der Gleitschiene 35.

Die Gleitschiene 35 weist im Bereich des Stapels 3 ein seitlich verschiebbares Mittelteil 49 auf. Dieses Mittelteil 49 wird durch zwei auf an dem Portalrahmen 7 befestigten Konsolen 50 vorgesehene Hydraulikzylinder 51 horizontal verschoben, wobei das Mittelteil 49 auf den beiden Konsolen 50 gleitet. Diese Verschiebung geschieht während des Hebens bzw. Senkens des Stapels 3.

Der Portalrahmen 7 besteht aus zwei gleichen, nebeneinander vertikal angeordneten U-Rahmen von rechteckigem Querschnitt. Die Schenkel 52 der U-Rahmen stehen auf dem Boden 27, sie sind oben durch horizontale Querholme 53 miteinander verbunden. Der Portalrahmen 7 übergreift den Stapel 3. An den beiden benachbarten Schenkeln ist die Verschiebeeinrichtung 6, nämlich der Schiebewagen 34 bzw. dessen Laufschiene 39, und an den beiden gegenüberliegenden Schenkeln 52 die Gleitschiene 35 bzw. die Konsolen 50 des verschiebbaren Mittelteiles 49 befestigt.

An den beiden Querholmen 53 hängen die vertikalen Paare von Tragbalken 31 der Haltevorrichtung 5, welche mittels der an den Schenkeln 52 vorgesehenen Hydraulikzylinder 33 in horizontaler Richtung gegeneinander verschiebbar sind. Die Tragbalken 31 weisen Köpfe 54 auf, welche mit Gleitflächen versehen sind und sich auf den Oberseiten der Querholme 53 bewegen.

Die Funktion der in den Figuren 1 und 2 dargestellten Aufheizeinrichtung ist folgende:
Während des Anheizens der Heizplatten 1 durch das sie durchströmende Thermoöl steht die Tischplatte 28 des Hubgerätes 4 in unterster Stellung, die Tragbalken 31 der Haltevorrichtung 5 sind nach außen geschoben, das Mittelteil 49 der Gleitschiene 35 ist zurückgezogen (mit Strichen angedeutete Stellung) und sowohl die Koppelmittel 24 wie die Tragorgane 41 der Verschiebeeinrichtung 6 sind zurückgezogen (mit Strichlinien angedeutete Stellung). Der Stapel 3 ist geschlossen, die Heizplatten 1 liegen übereinander, alle Rahmen 2 liegen dazwischen.

Ist die vorgesehene Temperatur der Heizplatten 1 erreicht, beginnt die Beschickung der Aufheizeinrichtung mit GMT-Zuschnitten. Zu diesem Zwecke wird das Hubgerät 4 in Tätigkeit gesetzt und der Stapel 3 soweit angehoben, bis der zu beschickende Rahmen 2 (das ist in der Figur 1 der dritte Rahmen 2 von oben) in Höhe der Verschiebeeinrichtung 6 steht. Die flexiblen Zu- und Ableitungen 11 erlauben den Heizplatten 1 die vertikale Bewegung. Nun tritt die Haltevorrichtung 5 in Tätigkeit und die Tragbalken 31 bewegen sich aufeinander zu, bis deren Auflager 30 die Tatzen 13 und 14 der Heizplatten 1 untergreifen (vgl. Figur 1).

Jetzt wird der Stapel 3 etwas mehr als um die Höhe der Distanzelemente 16 der Heizplatten 1 abgesenkt, dabei legen sich die Tatzen 13 und 14 aller über dem untersten Auflager 30 stehenden Heizplatten 1 auf die betreffenden Auflager 30 nacheinander auf. Nun wird die Verschiebeeinrichtung 6 aktiviert und deren Hydraulikzylinder 43, 45 und 51 beaufschlagt: die Tragorgane 41 untergreifen seitlich den obenauf liegenden, zu beschickenden Rahmen 2, die Koppelmittel 42 ergreifen mit ihren Aufnahmen 44 die Koppelbolzen 24 des Rahmens 2 und das Mittelteil 49 der Gleitschiene 35 legt sich unter den Tragflansch 25 dieses Rahmens 2.

Danach wird der Rest des Stapels 3, der unterhalb des zu beschickenden Rahmens 2 sitzt, nochmals um ein kleines Stück abgesenkt, nämlich wenigstens so weit, bis die lichte Öffnung des zu beschickenden Rahmens 2 aus dem Grundriß der darunterliegenden Heizplatte 1 heraustritt: dann kann dieser Rahmen 2 aus dem Stapel 3 horizontal nach vorn herausgeschoben werden. Das Herausschieben geschieht mit Hilfe des Schiebewagens 34 der Verschiebeeinrichtung 6, welcher von dem Seil- oder Kettenzug 47 durch den Getriebemotor 48 bewegt wird. In herausgeschobener Stellung werden ein oder mehrere vorzuwärmende Zuschnitte 19 auf die Spanndrähte 21 (die nutzbare Legefläche 55 ist mit einer strichpunktierten Linie in Figur 2 gekennzeichnet) aufgelegt, dann wird der solchermaßen beschickte Rahmen 2 wieder in den Stapel 3 eingeschoben und der Stapel 3 geschlossen, was durch Betätigung der verschiedenen Vorrichtungen in umgekehrter Reihenfolge geschieht. Auf diese Weise wird nach einem bestimmten Be- und Entladeplan, welcher minimale Fahrwege für das Hubgerät gewährleistet, die Aufheizeinrichtung betrieben.

Zusammenstellung der verwendeten Bezugsziffern

| | |
|---|---|
| 1 | Heizplatten |
| 2 | Rahmen |
| 3 | Stapel |
| 4 | Hubgerät |
| 5 | Haltevorrichtung |
| 6 | Verschiebeeinrichtung |
| 7 | Portalrahmen |
| 8 | Überzug |
| 9 | Innenbeheizung |
| 10 | Rohrsystem |
| 11 | Zu- und Ableitungen |
| 12 | Kesselanordnung |
| 13 | Tatzen |
| 14 | Tatzen |
| 15 | Unterseiten |
| 16 | Distanzelemente |
| 17 | Pfeile |
| 18 | Bespannung |
| 19 | Zuschnitte |
| 20 | lichte Öffnung |
| 21 | Spanndrähte |
| 22 | Gehäuse |
| 23 | Federn |
| 24 | Koppelbolzen |
| 25 | Tragflansch |
| 26 | Zylinder-Kolben-Aggregat |
| 27 | Boden |
| 28 | Tischplatte |
| 29 | Pfeile |
| 30 | Auflager |
| 31 | Tragbalken |
| 32 | Pfeile |
| 33 | Hydraulikzylinder |
| 34 | Schiebewagen |
| 35 | Gleitschiene |
| 36 | Rohr |
| 37 | Laufrollen |
| 38 | Laufkatzen |
| 39 | Laufschiene |
| 40 | Pfeil |
| 41 | Tragorgane |
| 42 | Koppelmittel |
| 43 | Hydraulikzylinder |
| 44 | Aufnahmen |
| 45 | Hydraulikzylinder |
| 46 | Doppelpfeile |
| 47 | Seil- oder Kettenzug |
| 48 | Getriebemotor |
| 49 | Mittelteil |
| 50 | Konsolen |
| 51 | Hydraulikzylinder |
| 52 | Schenkel |
| 53 | Querholm |

| | |
|---|---|
| 54 | Köpfe |
| 55 | Legefläche |

**Patentansprüche**

1. Aufheizeinrichtung für plattenförmige Zuschnitte thermoplastischer Kunststoffe, mit
   - Heizeinrichtungen zum Aufheizen der Zuschnitte;
   - beweglichen, zwischen den Heizeinrichtungen vorgesehenen Transportmitteln für die Zuschnitte;

   **gekennzeichnet** durch folgende Merkmale:
   - die Heizeinrichtungen sind ebene Heizplatten (1), die mit Innenbeheizungen (9) versehen und mit flexiblen Zu- und Ableitungen (11) für den Wärmeträger ausgestattet sind;
   - die Transportmittel sind ebene Rahmen (2) mit einer Bespannung (18) als Auflage für die Zuschnitte (19);
   - es ist ein Hubgerät (4) mit horizontaler Tischplatte (28) vorgesehen;
   - die Heizplatten (1) sind übereinander als Stapel (3) angeordnet, wobei die Rahmen (2) jeweils dazwischen vorgesehen und horizontal verschiebbar sind;
   - der Stapel (3) liegt auf der Tischplatte (28) auf und ist mittels des Hubgerätes (4) vertikal heb- und senkbar;
   - es ist eine Haltevorrichtung (5) mit gegeneinander bewegbaren Auflagern (30) vorgesehen, welche jeweils eine der Heizplatten (1) seitlich untergreifen.

2. Aufheizeinrichtung nach Anspruch 1, **gekennzeichnet** durch eine Verschiebeeinrichtung (6) für die Rahmen (2).

3. Aufheizeinrichtung nach Anspruch 2, dadurch **gekennzeichnet,** daß die Verschiebeeinrichtung (6) aus einem Schiebewagen (34) mit beweglichen Tragorganen (41) und Koppelmitteln (42) sowie einer diesem gegenüberliegenden Gleitschiene (35) besteht.

4. Aufheizeinrichtung nach einem der Ansprüche 1 bis 3, **gekennzeichnet** durch einen den Stapel (3) übergreifenden, doppelten, U-förmigen Portalrahmen (7), an welchem sowohl die Haltevorrichtung (5) als auch die Verschiebeeinrichtung (6) angeordnet sind.

5. Aufheizeinrichtung nach einem der Ansprüche 3 oder 4, dadurch **gekennzeichnet,** daß der Schiebewagen (34) auf einer horizontalen Laufschiene (39) verschiebbar ist, die am Portalrahmen (7) befestigt ist.

6. Aufheizeinrichtung nach einem der Ansprüche 3 bis 5, dadurch **gekennzeichnet,** daß die Rahmen (2) seitlich mit Koppelbolzen (24) versehen sind, mit welchen die Koppelmittel (42) des Schiebewagens (34) zusammenarbeiten, während die Tragorgane (41) den betreffenden Rahmen (2) untergreifen.

7. Aufheizeinrichtung nach einem der Ansprüche 3 bis 6, dadurch **gekennzeichnet,** daß die Gleitschiene (35) im Bereich des Stapels (3) ein seitlich verschiebbares Mittelteil (49) aufweist.

8. Aufheizeinrichtung nach einem der Ansprüche 1 bis 7, dadurch **gekennzeichnet,** daß als Innenbeheizung (9) der aus Stahl bestehenden Heizplatten (1) ein Kanalsystem für einen flüssigen Wärmeträger vorgesehen ist.

9. Aufheizeinrichtung nach einem der Ansprüche 1 bis 8, dadurch **gekennzeichnet,** daß an zwei gegenüberliegenden Seiten der einen rechteckigen Grundriß aufweisenden Heizplatten (1) jeweils zwei parallele Tatzen (13 und 14) hervorstehen, die zum Untergreifen durch die Auflager (30) der Haltevorrichtung (5) dienen.

10. Aufheizeinrichtung nach einem der Ansprüche 1 bis 9, dadurch **gekennzeichnet,** daß die Heizplatten (1) an ihren Unterseiten (15) Distanzelemente (16) aufweisen.

11. Aufheizeinrichtung nach Anspruch 10, dadurch **gekennzeichnet,** daß die Distanzelemente (16) im Stapel (3) durch die einen rechteckigen Grundriß aufweisenden Rahmen (2) hindurchgreifen.

12. Aufheizeinrichtung nach einem der Ansprüche 1 bis 11, dadurch **gekennzeichnet,** daß die Rahmen (2) eine lichte Öffnung (20) aufweisen, welche größer ist als der Grundriß der Heizplatten (1) und die Heizplatten (1) in die Rahmen (2) hineinragen.

13. Aufheizeinrichtung nach einem der Ansprüche 1 bis 12, dadurch **gekennzeichnet,** daß als Bespannung (18) der Rahmen (2) parallele Spanndrähte (21) als Auflage für die Zuschnitte (19) dienen, die durch Zugfedern (23) unter Spannung gehalten werden.

14. Aufheizeinrichtung nach einem der Ansprüche 1 bis 13, dadurch **gekennzeichnet,** daß jeder Rahmen (2) einen seitlich herausstehenden Tragflansch (25) aufweist, der zur Auflage auf der Gleitschiene (35) dient.

15. Aufheizeinrichtung nach einem der Ansprüche 1 bis 14, dadurch **gekennzeichnet,** daß die Tischplatte (28) des Hubgerätes (4) durch wenigstens ein hydraulisches Zylinder-Kolben-Aggregat (26) vertikal heb- und senkbar ist.

16. Aufheizeinrichtung nach einem der Ansprüche 1 bis 15, dadurch **gekennzeichnet,** daß als Haltevorrichtung (5) vier vertikal angeordnete Tragbalken (31) dienen, die paarweise an Querholmen (53) des Portalrahmens (7) hängend und gegeneinander verschiebbar vorgesehen sind und an deren freien Enden jeweils das Auflager (30) zum Untergreifen der Tatzen (14) der Heizplatten (1) sitzt.

17. Aufheizeinrichtung nach Anspruch 16, dadurch **gekennzeichnet,** daß an jedem Tragbalken (31) mehrere Auflager (30) kammartig übereinander angeordnet sind, deren Abstände mit denjenigen der Tatzen (13, 14) der übereinanderliegenden Heizplatten (1) im wesentlichen übereinstimmen.

18. Aufheizeinrichtung nach einem der Ansprüche 8 bis 17, dadurch **gekennzeichnet,** daß die den Rahmen (2) zugewandten Oberflächen der Heizplatten (1) einen Überzug (8) aufweisen.

Fig.1

EP 0 458 063 A2

Fig.2

EP 0 458 063 A2